# EUROPEAN PATENT SPECIFICATION

(11) **EP 0 525 722 B1**
(45) Date of publication and mention of the grant of the patent: **25.10.1995**
(21) Application number: 92112861.7
(22) Date of filing: 28.07.1992
(51) Int. Cl.: A01F 15/08, A01F 15/07

(54) **Machine for collection and packing by coiling of long-stemmed agricultural products**
Vorrichtung um landwirtschaftliches Langgut zu sammeln und zu rollpressen
Machine pour ramasser et enrouler des produits agricoles à tiges longues

(30) Priority: 02.08.1991 IT MI912170
(43) Date of publication of application: 03.02.1993
(73) Proprietor: C.A.E.B. DI ROTA & FANTINI S.n.c., 24018 Villa d'Almé (Bergamo) (IT)
(72) Inventor: Rota, Guido, I-25018 Villa d'Almé (Bergamo) (IT)
(74) Representative: Lecce, Giovanni

(56) References cited:
- EP-A- 0 150 628
- FR-A- 2 284 276
- FR-A- 2 547 161
- US-A- 4 198 804

## Description

The present invention relates to an improved machine for collection and packing by coiling of long-stemmed agricultural products.

More specifically the present invention relates to an improved machine for collection and packing by coiling of long-stemmed agricultural products such as hay and grass particularly suited to being connected to a small engine driven cultivator.

For the collection and coiling into bales hay, straw and in general long-stemmed agricultural products special machines which automatically recover the forage present on the ground and coil it up into cylindrical bales tied subsequently with a plastic net are traditionally employed.

Said machines are towed by tractors to whose power takeoff they are connected. The result is a unit made up of a coiling machine plus a tractor of considerable size and space occupied so that it is not possible to use these operating means in small plots of land situated on hillsides or mountains which are often steep and not easily accessible.

To obviate this inconvenience, Italian patent application no. 2935 A/90 filed 11 July 1990 in the name of the same applicant describes a machine for collection and baling by coiling of forage which can be connected to small nonsteering engine driven cultivators.

This Italian patent application describes a machine for collection and cylindrical baling by coiling of hay and other long-stemmed agricultural products connected to the usual very small engine driven cultivators with nonsteering pushing roller and provided with a controlled collection means which feeds the hay or other agricultural product to a substantially cylindrical chamber delimited by controlled rollers. The machine is connected to the engine driven cultivator by means of a male-female engagement between a tubular extension of a structure of the machine and a coupling tube coaxial with a coaxial drive shaft. Said engagement being obtained by a radial bolt screwed onto the coupling tube and penetrating into the inside of a circumferential slot. Said engagement permits achieving an axial stop, longitudinal rigidity and articulated joint freedom around a longitudinal axis, etc.

Said machine forms bales of straw, hay and equivalent of reduced dimensions and does not require a tractor to be moved. In addition, substantially forming a single body with an engine driven cultivator supplying power takeoff, it is less cumbersome and therefore useful for operation on mountainous, hilly or not flat terrain of reduced area.

This known machine however does not fully and satisfactorily solve all the requirements for collection and coiled baling of long-stemmed agricultural products lying in small fields, especially mountainous or hilly ones. In particular, the machine described in the above mentioned Italian patent application has the shortcoming of showing over time undesired loosening or yielding of the entrainment/roller unit. Increasing the tension of this unit is required to stabilized the degree of compactness reached by the forage bales being formed. In addition, the motion transmission system of the engine driven cultivator is not fully satisfactory.

The purpose of the present invention is to eliminate the above mentioned shortcomings of the known machine.

Another purpose of the present invention is to provide multiple rollers arranged circularly inside the chamber in which the forage bale is formed and bearings easy and economical to provide. A primary purpose of the invention is to provide, in a machine as described in FR-A-2284276, means to signal achievement of the compactness of the forage bale being formed in the machine.

These and other purposes are achieved by an improved machine for the collection and baling by coiling of forage having all the features of claim 1.

The machine of the present invention can be better understood from the following description in which reference is made to the figures of the annexed drawings representing a preferred but nonlimiting embodiment thereof and wherein:
FIG. 1 shows schematically a cross section of the improved machine making clear in particular the arrangement of the rollers inside the forage bale formation chamber,

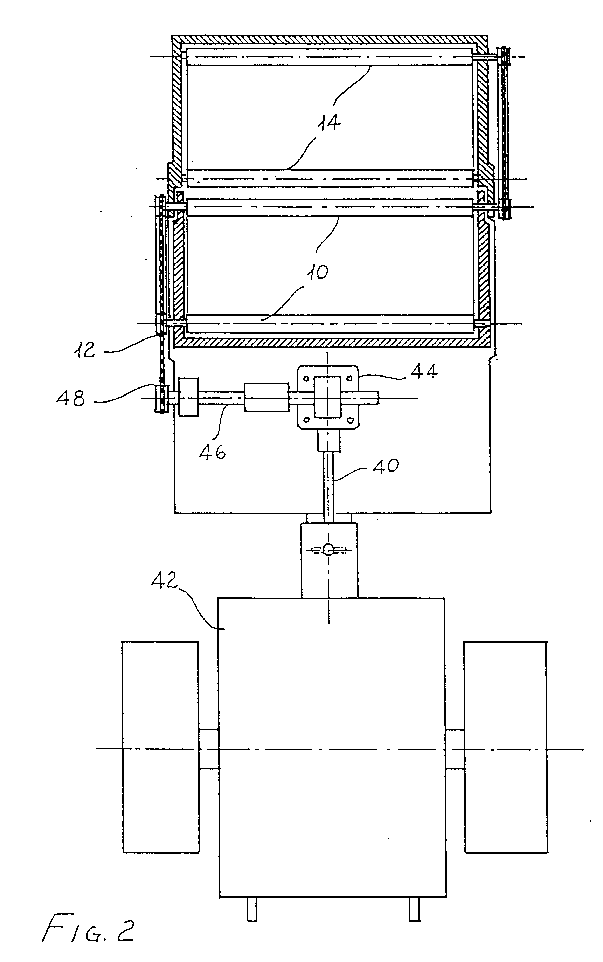

FIG. 2 shows a schematic view of the transmission system of the machine of FIG. 1 connected to a drive shaft of an engine driven cultivator,

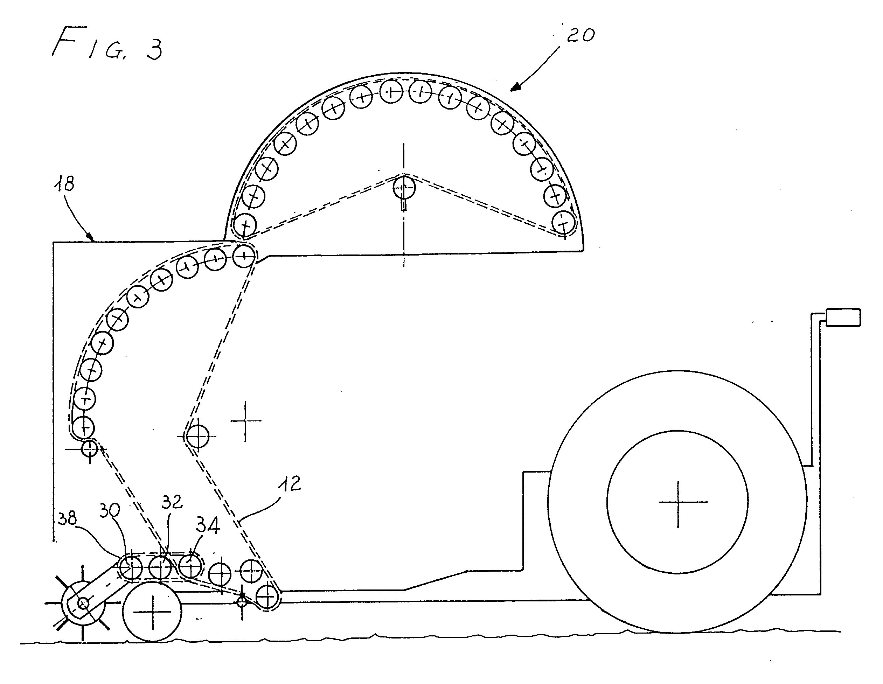

FIG. 3 shows a schematic view of the path of the transmission chains in the improved machine of the above figure in open condition,
FIG. 4 shows a front view of the bearing with which the multiple rollers are provided, and
FIG. 5 shows a longitudinal cross section of one of the rollers with related bearing associated therewith.

With specific reference to the figures the improved machine for collection and baling of windrowed fibrous agricultural material and equivalent comprises a cagelike frame having a horizontal central axis defining a generally cylindrically-shaped baling zone. The cage-like frame is divided in two shells (18,20) hinged together along a nearly vertical plane. Said cage-like frame comprises a bottom conveyor means and a pressing system arranged above said conveyor bottom and which rotates in the same direction as the bottom conveyor means. Between the bottom conveyor means and the pressing system is arranged an inlet opening.

The pressing system consists of a multiplicity of rollers (10,14) connected together and which delimit the pressing compartment and are arranged practically over the entire perimeter of the pressing compartment leaving free the inlet opening. Said rollers (10,14) are fixably journalled to the frame, stationarily mounted on said frame relative to each other and disposed around the generally cylindrical periphery of the baling zone.

The axis of each of said rollers (10,14) is arranged in generally parallel relation to the horizontal central axis of the baling zone. Entrainment chains (12,16) rotate said rollers (10,14).

On the upper rollers (10) arranged circularly runs the chain (12) while on the rollers (14) indicated in broken lines and similarly arranged circularly runs the chain (16).

The two roller units (10,14) are arranged inside the two shells (18,20) of the improved machine hinged together for opening of the assembly and expulsion of the bale after coiling.

The chain (12) is guided for holding the approach to the roller pinions by other upper antijumping chain rollers or pulleys (22) and lower antijumping chain rollers or pulleys (24,24'), the latter being provided with a tightener (26) constrained to the machine structure.

In the inlet opening are arranged rollers (30,32,34) which form a base surface which constitutes the mouth through which the forage enters the machine. Said rollers (30,32,34) are driven by the chain (38). The axes of the rollers (30,32,34) are arranged on a substantially horizontal line preferably slightly inclined toward the inside of the collection chamber. This arrangement of the rollers (30,32,34) facilitates input of the material to be baled and prevents wear of the last roller (34) which is the one subject to the greater stress.

The multiple roller groups are rotated through the corresponding chains starting from the shaft (40) which, emerging from the engine driven cultivator (42), constitutes the power takeoff of the unit. Said shaft (40) engages in the angular transmission (44) at a 90° angle for a shaft (46) on which is mounted the pinion (48). The latter, through the chain (12), moves the multiple rollers (10) and the roller (34) which, through the chain (38), rotates the corresponding rollers (30,32) and anything connected thereto.

Movement of the roller (14) arranged in the sector corresponding to the casing (20) is not described in detail since it is of known type.

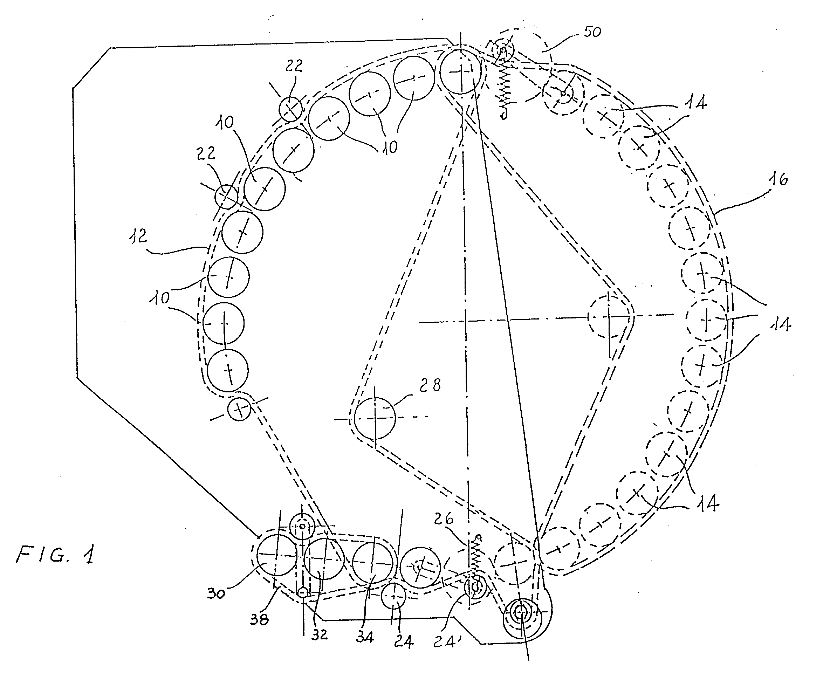

In the upper part of the improved machine of the present invention is arranged another roller (50) having preferably a diameter greater than the preceding ones. Said roller (50) is disengaged from the chain and is thus idling. The function of said roller (50) is illustrated in FIG. 1 merely by way of example as regards positioning and number and is to signal achievement of the compactness of the forage bale being formed in the machine. After reaching a predetermined size and consistency it contacts and rotates the roller (50). Means for braking said roller (50) at will are provided so that under the entraining effect of the bale being formed it rotates only in the presence of a prearranged friction stress. Said means can consist for example, of clutch devices or equivalent.

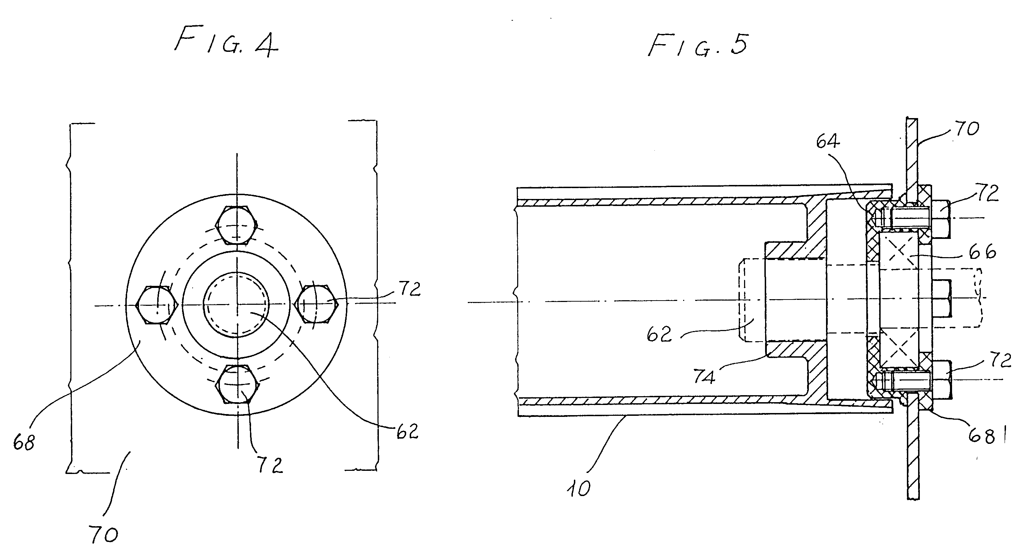

FIGS. 4 and 5 illustrate the system of constraint of the bearings to each of the rollers (10,14) in accordance with a preferred embodiment.

The opposing pins (62) emerging from the above mentioned rollers are inserted in ball bearings which facilitate their optimal rotation protected from seizure. In order to use common bearings and avoid extremely accurate operations on the machine casing with possible insertion of seats for said bearings, in the heads of the rollers is housed a cap (64) designed to contain the bearing (66). Said bearing (66) is subsequently closed from the outside by a flange (68) which tightens on the casing, indicated by reference number (70), by screws (72) which meet corresponding seats provided in the above mentioned cap.

In this manner the roller (10) with its own pin (62) forced and blocked, e.g. by means of knurling in the portion (74), can rotate freely while the flange (68) simultaneously closes on the outer rim of the bearing (66).

With this structural layout absolutely accurate boring is not required on said casing and consequently considerable production savings are obtained considering the large number of rollers (10,14) and related bearings present in the machine.

As may be seen from the above the many advantages achieved by the invention are evident.

Particularly advantageous in the improved machine for collection and coiled baling of hay and equivalent is the system of motion transmission to the rollers (10,14) from the shaft (42) which engages in the angular transmission (44). The same is true concerning the presence of the idling roller (50) designed to indicate completion of optimal compaction of the forage bale being formed.

The use of caps (64) with flange (68) for housing and constraint of the multiple bearings for the rollers (10,14) provides considerable economies in construction.

The improved machine in accordance with the present invention can be readily connected to an engine driven cultivator, power mower, etc. even of limited size and power. It does not need a tractor or other cumbersome means equipped with specific hydraulic and/or electrical systems and does not operate by towing.

The improved machine of the present invention can in any case be applied to small tractors provided with power takeoff and front hoist.

The machine of the present invention can be powered independently, i.e. provided with at least one axle with drive wheels, motor and means of transmitting motion to the rollers of the baling zone.

## Claims

1. An improved machine for collecting and coiled baling of long-stemmed agricultural products and equivalents suitable for being associated with very small engine driven cultivators, said machine comprising:
- a cage-like frame (18,20) having a horizontal central axis defining a generally cylindrically-shaped baling zone;
- a pressing system comprising a plurality of rollers (10,14) fixably journalled to the inside of said frame, stationarily mounted on said flame relative to each other and disposed around the generally cylindrical periphery of the baling zone, the axis of each of said rollers (10,14) being disposed in general parallel relation to the horizontal central axis of the baling zone;
- means for moving said rollers (10,14) consisting of chains (12,16) starting from a pinion mounted on a 90° outlet shaft of an angular transmission (44), engaged, when being associated with very small engine driven cultivators or equivalent, by a shaft emerging from the engine driven cultivator or equivalent;
- a bottom conveyor means, and
- an inlet opening between said bottom conveyor means and the pressing system, said inlet opening comprising rollers (30,32,34), driven by a chain (38) and forming a base surface for a entering mouth of the long-stemmed agricultural products; characterized in that the cage-like frame (18,20) is provided with means indicating the compactedness of the forming bale, said means consisting of a further roller (50) journalled on the upper part of the baling zone, said further roller being disengaged from the chains driving the rollers of the pressing system and of the inlet opening, and said further roller rotating through contact between said further roller and the bale when the bale reaches a predetermined size and consistency.

2. The machine according to claim 1, wherein the roller (50) is provided with braking means to rotate at a prearranged friction stress.

3. The machine according to claim 1 or 2, characterized in that it is connected to a small engine driven cultivator by engaging the angular transmission (44) to a shaft (40) emerging from said cultivator.

4. The machine according to claim 3, wherein the rollers (30,32,34) of the mouth are moved by the shaft (40) emerging from the cultivator through a chain (38) and the angular trasmission (44).

5. The machine according to any one of the preceding claims, wherein the axes of the rollers (30,32,34) of the mouth are arranged along a substantially horizontal line.

6. The machine according to any one or the preceding claims from 1 to 4, wherein the axes of the rollers (30,32,34) of the mouth are arranged along a line slightly inclined toward the inside of the baling zone.

## Patentansprüche

1. Verbesserte Maschine zum Sammeln und Paketieren in Wickeln von langschaftigen Agrarprodukten und dgl., die geeignet ist, sehr kleinen, maschinengetriebenen Kultivatoren zugeordnet zu werden, wobei die Maschine umfaßt:
- einen käfigförmigen Rahmen (18,20) mit einer horizontalen Mittelachse, die eine im allgemeinen zylinderförmige Paketierzone bestimmt,
- einer Preßeinrichtung mit einer Anzahl von Walzen (10,14), die an der Innenseite des Rahmens feststellbar gelagert, stationär an dem Rahmen relativ zueinander angebracht und um den im allgemeinen zylindrischen Umfang der Paketierungszone angeordnet sind, wobei die Achse jeder dieser Walzen (10,14) im allgemeinen parallel zu der horizontalen Mittelachse der Paketierungszone angeordnet ist,
- eine Einrichtung zum Bewegen dieser Walzen (10,14), die aus Ketten (12,16) besteht, die von einem Zahnrad ausgehen, das auf einer in einem Winkel von 90° angeordneten Ausgangswelle eines Winkelgetriebes (44) angebracht ist, mit dem bei der Verwendung mit sehr kleinen, maschinenbetriebenen Kultivatoren oder dgl. durch eine Welle ein Eingriff hergestellt wird, die von dem maschinenbetriebenen Kultivator oder dgl. ausgeht,
- einer unteren Fördereinrichtung, und
- einer Auslaßöffnung zwischen dieser unteren Fördereinrichtung und der Preßeinrichtung, wobei die Einlaßöffnung Walzen (30,32,34) umfaßt, die durch eine Kette (38) angetrieben werden und eine Basisfläche für eine Eintrittsmündung für die langschaftigen Agrarprodukte bilden,
**dadurch gekennzeichnet,**
daß der käfigförmige Rahmen (18,20) mit einer Einrichtung versehen ist, welche die Verdichtung bzw. den Kompaktheitsgrad des sich bildenden Ballens angibt, wobei diese Einrichtung aus einer weiteren Walze (50) besteht, die am oberen Teil der Paketierungszone gelagert ist, wobei diese weitere Walze von den Ketten außer Eingriff gebracht wird, die die Walzen der Preßeinrichtung und der Einlaßöffnung antreiben, und diese weitere Walze über den Kontakt zwischen dieser weiteren Walze und dem Ballen rotiert, wenn der Ballen eine vorbestimmte Größe und Konsistenz erreicht.

2. Maschine nach Anspruch 1, wobei die Walze (50) mit einer Bremseinrichtung versehen ist, damit sie bei einer vorbestimmten Reibungsspannung rotiert.

3. Maschine nach Anspruch 1 oder 2,
dadurch gekennzeichnet,
daß sie mit einem kleinen, maschinenbetriebenen Kultivator durch den Eingriff zwischen dem Winkelgetriebe (44) und einer Welle (40) verbunden ist, die von diesem Kultivator ausgeht.

4. Maschine nach Anspruch 3, wobei die Walzen (30,32,34) der Mündungsöffnung durch die von dem Kultivator ausgehende Welle (40) über eine Kette (38) und das Winkelgetriebe (44) bewegt werden.

5. Maschine nach einem der vorhergehenden Ansprüche, wobei die Achsen der Walzen (30,32,34) der Mündungsöffnung längs einer im wesentlichen horizontalen Linie angeordnet sind.

6. Maschine nach einem der vorhergehenden Ansprüche 1 bis 4, wobei die Achsen der Walzen (30,32,34) der Mündungsöffnung längs einer Linie angeordnet sind, die in Richtung auf die Innenseite der Paketierungszone leicht geneigt ist.

## Revendications

1. Machine améliorée pour collecter et mettre en bottes enroulées des produits agricoles à longues tiges et analogues, appropriée pour être associée à des motoculteurs mus par de très petits moteurs, ladite machine comprenant :
un bâti du type cage (18, 20) ayant un axe central horizontal définissant une zone de mise en bottes de forme globalement cylindrique ;
un système de pressage comprenant plusieurs rouleaux (10, 14) montés sur tourillons de façon fixe à l'intérieur dudit bâti, montés sur ledit bâti, stationnaires les uns par rapport aux autres, et disposés autour de la périphérie globalement cylindrique de la zone de mise en bottes, l'axe de chacun desdits rouleaux (10, 14) étant disposé dans une disposition globalement parallèle par rapport à l'axe central de la zone de mise en bottes ;
un moyen pour déplacer lesdits rouleaux (10, 14), constitué par des chaînes (12, 16) partant d'un pignon monté sur un arbre de sortie à 90° d'une transmission d'angle (44), accouplée, lorsqu'elle est associée à un motoculteur mû par un très petit moteur ou analogue, à un arbre sortant du motoculteur ou analogue ;
un moyen convoyeur de fond ; et
une ouverture d'entrée située entre ledit moyen convoyeur de fond et le système de pressage, ladite ouverture d'entrée comprenant des rouleaux (30, 32, 34), entraînés par une chaîne (38) et formant une surface de base pour une embouchure d'entrée des produits agricoles à longues tiges :
caractérisée en ce que le bâti du type cage (18, 20) est pourvu d'un moyen indiquant la compacité de la botte en formation, ledit moyen étant constitué par un rouleau supplémentaire (50) monté sur tourillons à la partie supérieure de la zone de formation de bottes, ledit rouleau supplémentaire étant dégagé des chaînes d'entraînement des rouleaux du système de pressage et de l'ouverture d'entrée, et ledit rouleau supplémentaire tournant, grâce au contact entre ledit rouleau supplémentaire et la botte, lorsque la botte atteint une taille et une consistance prédéterminées.

2. Machine selon la revendication 1, dans laquelle le rouleau (50) est pourvu d'un moyen de freinage pour tourner sous un effort de frottement préréglé.

3. Machine selon la revendication 1 ou 2, caractérisée en ce qu'elle est montée sur un motoculteur mû par un petit moteur par accouplement de la transmission d'angle (44) à un arbre (40) sortant dudit motoculteur.

4. Machine selon la revendication 3, dans laquelle les rouleaux (30, 32, 34) de l'embouchure sont mus par l'arbre (40) sortant du motoculteur par l'intermédiaire d'une chaîne (38) et de la transmission d'angle (44).

5. Machine selon l'une quelconque des revendications précédentes, dans laquelle les axes des rouleaux (30, 32, 34) de l'embouchure sont agencés suivant une ligne sensiblement horizontale.

6. Machine selon l'une quelconque des revendications 1 à 4 précédentes, dans laquelle les axes des rouleaux (30, 32, 34) de l'embouchure sont agencés suivant une ligne légèrement inclinée en direction de l'intérieur de la zone de formation de bottes.
